# EUROPEAN PATENT APPLICATION

(11) **EP 2 662 772 A1**
(43) Date of publication of application: **13.11.2013**
(21) Application number: 13162295.3
(22) Date of filing: 04.04.2013
(51) Int. Cl.: G06F 11/07

(54) **Device fault handling system and communication-compatible device**

(30) Priority: 10.05.2012 JP 2012108802
(71) Applicant: Funai Electric Co., Ltd., Daito-shi Osaka 574-0013 (JP)
(72) Inventor: Kato, Shuji, Osaka 574-0013 (JP); Matsumura, Akifumi, Osaka 574-0013 (JP)
(74) Representative: Osha Liang SARL

(57) **Abstract**

A device fault handling system (100) includes a host device (20) provided on a network and a communication-compatible device (10) that enables communication with the host device (20) through the network. The communication-compatible device (10) is configured to send to the host device (20) fault event information indicating an occurrence of a fault in a specific function of the communication-compatible device (10), and the host device (20) is configured to provide notification of query information to the user, based on the fault event information, as to whether the fault is to be handled by the user or whether the fault is to be handled on a host device (20) side.

## Description

### [Field of Technology]

The present invention relates generally to a device fault handling system and communication-compatible device, and to a device fault handling system and communication-compatible device wherein fault event information is sent to a host device.

### [Background Art]

Conventionally there have been known device fault handling systems wherein fault event information is transmitted to a host device (e.g., Patent Document 1).

This Patent Document 1 discloses an image forming device controlling system (device fault handling system) comprising a central controlling device (host device) and an image forming device able to transmit data indicating a fault (fault event information) through a public network to the central controlling device. The image forming device is configured so that, when there is a fault, an evaluation is performed as to whether or not the fault is a fault that requires handling (an action) by a service technician, and if the evaluation is that handling by a service technician is required, so as to transmit data indicating the fault automatically to the central controlling device. This results in handling being performed by the service technician.

[Patent Document 1] Japanese Unexamined Patent Application Publication 2001-34122

However, in the image forming device controlling system of Patent Document 1, when there is an evaluation by the image forming device that there is a fault that requires handling by a service technician, the data indicating the fault (the fault event information) is sent automatically to the central controlling device and handling (an action) is performed by the service technician, so there is a shortcoming in that there may be cases wherein the handling (action) by the service technician is started even if the user wants to perform the action himself/herself. This is inconvenient to the user when a fault occurs.

### [Summary of the Invention]

One or more embodiments of the present invention provide a device fault handling system and communication-compatible device able to increase the convenience for the user when a fault occurs.

In general, according to one aspect of the present invention, a device fault handling system includes a host device provided on a network and a communication-compatible device that enables communication with the host device through the network. The communication-compatible device is configured to send to the host device fault event information indicating an occurrence of a fault in a specific function (o in specific functions) of the communication-compatible device, and the host device is configured to provide notification of query information to the user, based on the fault event information, as to whether the fault is to be handled by the user or whether the fault is to be handled on a host device side.

According to one or more embodiments of the present invention, the host device is configured to provide notification of query information to the user, based on the fault event information, as to whether the fault is to be handled by the user or whether the fault is to be handled on the host device side, when a fault has occurred in a specific function (or in specific functions) of a communication-compatible device. In this way, the fault may be handled by the user when, at the time at which a fault occurs, the user wants to handle the fault himself/herself, which results in an improvement in convenience for the user when a fault occurs. Moreover, according to one or more embodiments of the present invention, the communication-compatible device is configured to send to the host device, for example through a network, fault event information indicating that a fault has occurred in a specific function (or in specific functions), thus enabling broad collection, by the host device, of information pertaining to faults through the network. In this way, effective utilization of the collected information, for example for better designing the communication-compatible device, is obtained. Moreover, according to one or more embodiments of the present invention, the fault event information indicating that a fault has occurred in a specific function (or in specific functions) may be sent automatically to the host device by the communication-compatible device, thus enabling more accurate collection of information pertaining to faults, unlike a case wherein the fault event information is sent based on a sending operation by the user.

According to one or more embodiments of the present invention, the host device is configured to provide notification to the user, based on the fault event information, of both query information and information indicating the details of the fault. Such a configuration enables the user to determine easily the actor (the user or the host device) that will handle the fault, depending on the details of the fault.

According to one or more embodiments of the present invention, the communication-compatible device may be configured to send to the host device, for example through a network, fault event information, when a fault has occurred in a specific function (or in specific functions) of the communication-compatible device. The fault event information may include at least one of fault type information, user information, or communication-compatible device identification information. Such a configuration enables more detailed analysis on the host device side regarding the fault that has occurred, based on at least one of fault type information, user information, or the communication-compatible device identification information. In this way, more detailed understanding of the characteristics of the fault are possible, so that the fault may be appropriately handled and a more appropriate design of the communication-compatible device may be chosen.

According to one or more embodiments of the present invention, the host device is configured to perform handling of the fault in the communication-compatible device through remote operation through the network when the host device is requested to handle the fault. Such a configuration does not require a service technician to be dispatched to the location of the communication-compatible device in which a fault has occurred, thus enabling more rapid handling of the fault.

According to one or more embodiments of the present invention, the communication-compatible device may have a plurality of functions. According to one or more embodiments of the present invention, the host device may be configured to stop a specific function (or specific functions) in which a fault has occurred, from among the plurality of functions of the communication-compatible device, when it is not possible to handle the fault in the communication-compatible device through a remote operation through the network. Such a configuration enables stopping of only the function(s) for which the fault cannot be handled, in a state in which the functions that can be used in the communication-compatible device are still used. In this way, the communication-compatible device may be used even after a fault has occurred, unlike a case in which the functions of the entirety of the communication-compatible device are stopped.

According to one or more embodiments of the present invention, the host device is configured to provide notification of information indicating a procedure for performing handling of the fault by the user. Such a configuration enables the user himself/herself to handle the fault easily following the procedure for handling the fault. This also increases the convenience for the user.

According to one or more embodiments of the present invention, the communication-compatible device not only may have a plurality of functions, but may also be configured to send to the host device, for example through a network, a could-not-resolve report indicating that the user could not resolve the fault, for example following a number of unsuccessful attempts by the user. According to one or more embodiments of the present invention, the host device may be configured to stop a specific function (or specific functions) in which the fault has occurred, from among the plurality of functions of the communication-compatible device, based on the could-not-resolve report. Such a configuration enables stopping, by the host device, of only the function(s) in which the fault could not be resolved, in a state in which the functions that are usable are still used, even if the user was unable to resolve the fault after attempting to handle the fault himself/herself.

According to one or more embodiments of the present invention, a notifying portion able to provide notification of query information is provided on the communication-compatible device side. Such a configuration enables easy notification of query information, through the notifying portion, to a user who is near to the communication-compatible device.

According to one or more embodiments of the present invention, the host device is configured to provide notification of query information through at least one of email, telephone, or postal mail when there is no response from the user within a specific period of time after the notification of the query information to the communication-compatible device. Such a configuration enables more reliable notification of query information to the user using at least one email, telephone, and/or postal mail even if the user is not near to the communication-compatible device.

In general, according to another aspect of the present invention, a communication-compatible device includes a communicating portion configured to enable communication with a host device through a network; and a controlling portion that: controls the communicating portion to send, to a host device, fault event information indicating an occurrence of a fault in a specific function and controls the host device to receive the fault event information, and provides notification of query information to the user, based on the fault event information, as to whether the fault is to be handled by the user or whether the fault is to be handled on a host device side.

According to one or more embodiments of the present invention, a controlling portion may be provided for performing control, when a fault has occurred in a specific function (or in specific functions), so as to receive from the host device, and so as to provide notification to the user, of query information as to whether the fault is to be handled by the user or whether fault handling is to be requested on the host device side. This enables selection of handling of the fault by the user when the user wishes to handle a fault himself/herself when a fault has occurred, thus enabling improved convenience to the user when a fault has occurred. Moreover, the configuration of the controlling portion so as to send to the host device, through the communicating portion, fault event information indicating that a fault has occurred in the specific function(s) when a fault has occurred in a specific function (or in specific functions) enables broad collection of information, by the host device, for example through a network, pertaining to faults. In this way, the collected information may be used in an effective manner, for example, in order to better design the communication-compatible device. Moreover, when control is performed by the controlling portion so as to send the fault event information, which indicates that a fault has occurred in a specific function, to the host device automatically, a more reliable collection of information pertaining to faults may be obtained, unlike a case in which the fault event information is sent based on a user sending operation.

One or more embodiments of the present invention, as described above, are able to improve convenience for the user when a fault has occurred.

### [Brief Descriptions of the Drawings]

FIG. 1 is a schematic diagram illustrating the overall configuration of a device fault handling system according to one embodiment of the present invention.
FIG. 2 is a flowchart illustrating the procedures when a fault has occurred in the device fault handling system according to one embodiment of the present invention.
FIG. 3 is a flowchart illustrating the procedures when a fault has occurred in the device fault handling system according to one embodiment of the present invention.
FIG. 4 is a diagram illustrating the state wherein query information of the device fault handling system according to one embodiment of the present invention is displayed on a television.

### [Detailed Description of Embodiments of the Invention]

An embodiment of the present invention will be explained based on the figures.

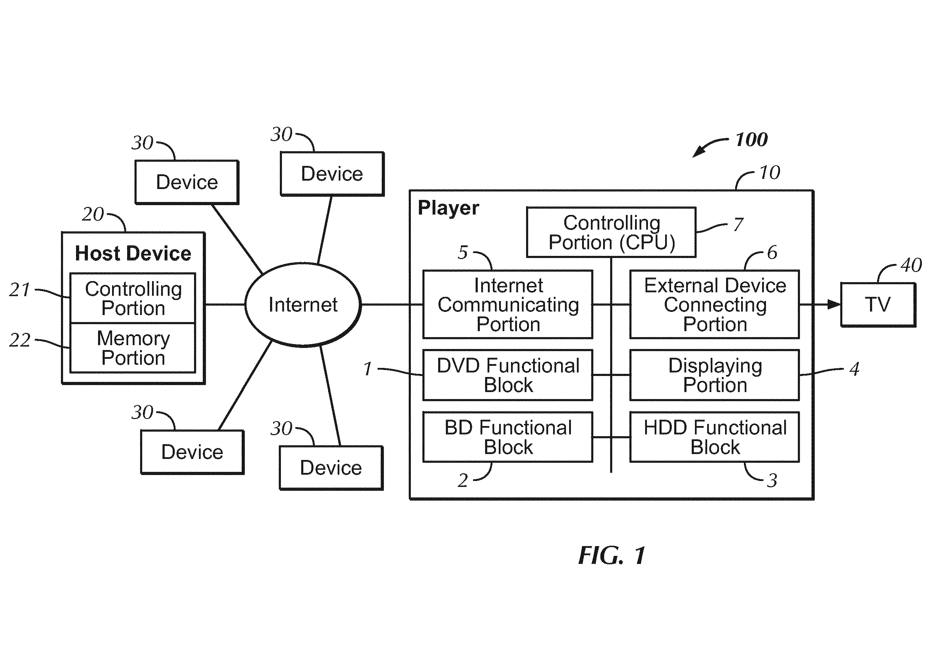

The configuration of the device fault handling system 100 according to one embodiment according to the present invention will be explained in reference to FIG. 1.

The device fault handling system 100 according to the present embodiment comprises a player 10, a host device 20, and a plurality of devices 30. Note that the player 10 is one example of a "communication-compatible device" in the present disclosure. Moreover, the plurality of devices 30 is not limited to players, but may also be devices other than players, such as televisions and recorders.

The player 10 is configured so as to be able to playback content recorded respectively on a DVD (Digital Versatile Disc), a BD (Blu-ray ™ disc), and an HDD (Hard Disc Drive). Moreover, the player 10 is configured so as to be able to output the video and audio of the content that is played back to a connected external device (such as a television 40). Furthermore, the player 10 is configured so as to receive query information, regarding handling of the fault, from the host device 20 through the Internet when a fault (error) has occurred in a specific function. The player 10 comprises a DVD functional block 1, a BD functional block 2, an HDD functional block 3, a displaying portion 4, an Internet communicating portion 5, an external device connecting portion 6, and a controlling portion 7.

The DVD functional block 1 is configured so as to be able to read out and play back DVD video signals and audio signals. The BD functional block 2 is configured so as to be able to read out and play back BD video signals and audio signals. The HDD functional block 3 is configured so as to be able to read out and play back video signals and audio signals of content recorded on the HDD. That is, the player 10 has a DVD playing function, a BD playing function, and an HDD content playing function.

The displaying portion 4 is provided on an outside surface of the player 10 in order to display the state of activation of the player 10 and the current time. The Internet communicating portion 5 is compatible with Ethernet™. The player 10 is connected to the Internet through the Internet communicating portion 5. The Internet communicating portion 5 is an example of a "communicating portion" in the present disclosure. The external device connecting portion 6 is HDMI™-compatible, and has a function for connecting to an external device, such as a player 10 or a television 40, so as to enable communication. The player 10 is configured so as to be able to send various types of information to the external device through the external device connecting portion 6.

The controlling portion 7 is made from a CPU, and is configured so as to control the overall operation of the player 10 by executing a computer program, not shown. Moreover, the controlling portion 7 is configured so as to execute a fault event procedure, described below, with a fault (error) has occurred in any of the functions of the player 10.

The host device 20 is connected on the Internet, and is configured so as to collect information pertaining to faults (errors) from the player 10 and from the other devices 30 through the Internet. Moreover, the host device 20 comprises a controlling portion 21 and a memory portion 22. The controlling portion 21 not only performs control so as to store the collected information pertaining to faults to the memory portion 22, but also has a function for analyzing the collected information. Moreover, the controlling portion 21 of the host device 20 is configured so as to provide, to the corresponding device, notification of query information pertaining to the handling of the fault when information pertaining to a fault has been received through the Internet. The controlling portion 21 is configured so as to enable execution of the fault event procedure, described below.

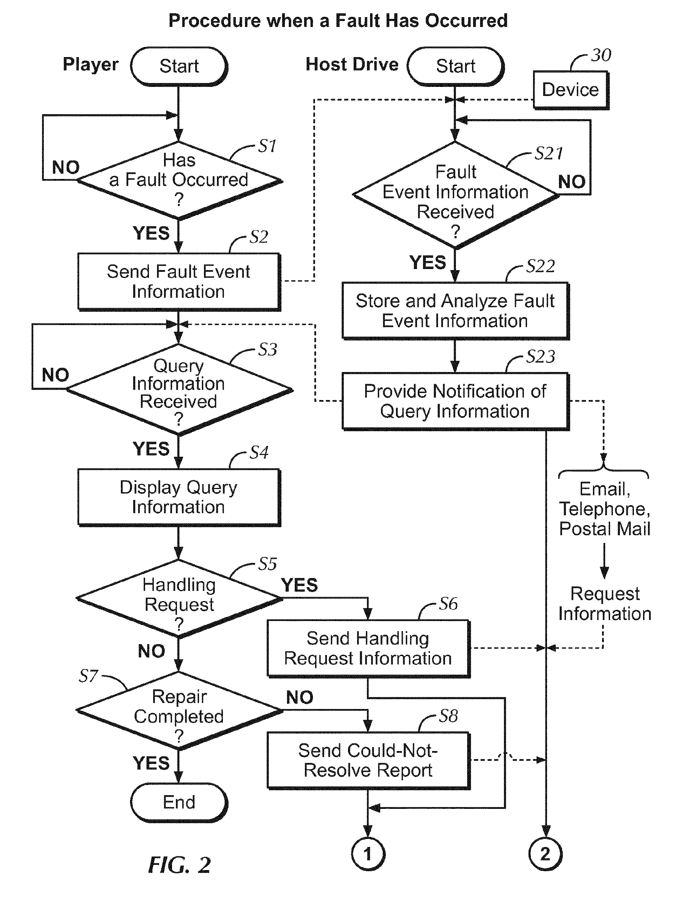

The fault event procedure of the device fault handling system 100 according to the present embodiment will be explained next in reference to FIG. 1 through FIG. 4. Here the explanation will be for the case of the occurrence of a fault in any of the functions of the DVD playing function, the BD playing function, or the HDD content playing function of the player 10. Moreover, as illustrated in FIG. 1, a television 40 is connected to the external device connecting portion 6 of the player 10. Note that the television 40 is one example of a "notifying portion" in the present disclosure.

First, in Step S1, the controlling portion 7 of the player 10 evaluates whether or not a fault has occurred in any of the functions that are the DVD playing function, the BD playing function, and the HDD content playing function, and repeats the evaluation until a fault has occurred. When a fault has occurred in any of these functions, the controlling portion 7, in Step S2, performs control so as to send fault event information, indicating that a fault has occurred in a specific function, through the Internet communicating portion 5 to the host device 20. The fault event information includes information on the location wherein the fault occurred, fault type information, a username, user contact information (telephone number and email address), user address information, the serial number of the player 10, player 10 model information, and so forth. The user information (the username, contact information, and address information) is included in the fault event information only if the user information has been registered by the user in advance. Note that the information on the location wherein the fault has occurred is information indicating the function wherein the fault has occurred, that is, the DVD playing function, the BD playing function, or the HDD content playing function. Moreover, the fault type information is information indicating the detail of the fault in the function in which a fault has occurred. As detail of the fault there is, for example, a voltage fault, a latch circuit fault, a disc recognition fault, a power supply fault, a prism fault, and so forth.

The controlling portion 21 of the host device 20, in Step S21, evaluates whether or not fault event information has been received, and repeats the evaluation until said reception. The fault event information is sent through the Internet to the host device 20 from not only the player 10, but from the other devices 30 as well. When fault event information is received, the controlling portion 21, in Step S22, stores the received fault event information in the storing portion 22. In this way, the host device 20 collects and accumulates fault event information that is sent from the player 10 and the other devices 30. Furthermore, the controlling portion 21 analyzes the detail of the collected fault event information. Doing so enables specification of locations wherein faults tend to occur, and other details, based on the fault event information, thus enabling feedback into the design of the applicable device. Furthermore, this enables review of the components or manufacturing processes wherein faults tend to occur, based on the serial numbers and model information for the devices included in the fault event information.

Moreover, the controlling portion 21 of the host device 20, in Step S23, provides notification of query information to the device wherein the fault has occurred (the player 10) based on the fault event information. The query information is detailed information to query the user as to whether the fault is to be handled by the user or whether to request handling of the fault on the host device 20 side. Moreover, fault detail information for notifying the user of the detail of the fault and handling procedure information for informing the user of the handling procedure, are sent together with the query information. If necessary, the controlling portion 21 sends the query information to not only the device on which the fault occurred, but also to other devices 30 wherein there is a high likelihood of occurrence of the fault, based on the results of analysis of the fault event information.

Moreover, when the user has registered user information (the username, contact information, and address information) in advance, the controlling portion 21, in parallel to notifying the player 10, provides notification of query information through email, telephone, and postal mail. This enables reliable notification of query information to the user using the different means of email, telephone, and postal mail, even if the user is not near to the player 10.

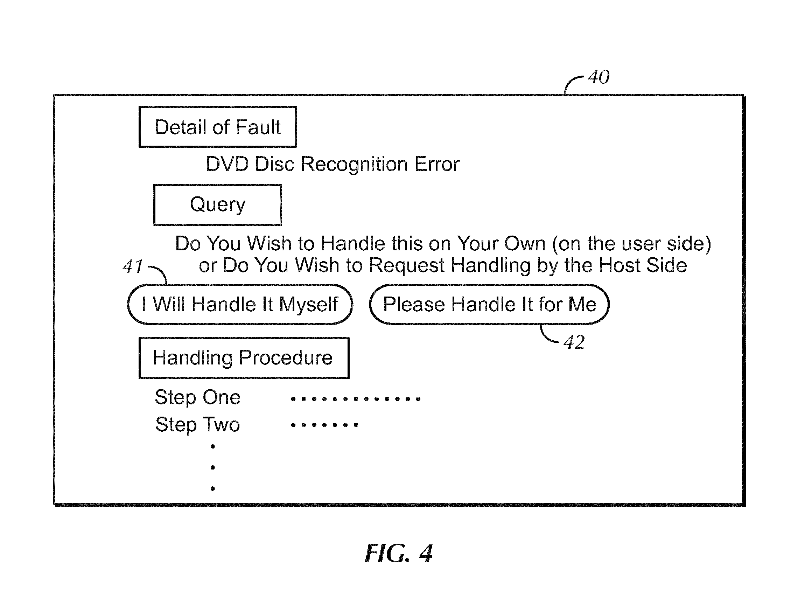

The controlling portion 7 of the player 10, after sending the fault event information, evaluates, in Step S3, whether or not query information has been received, and then repeats the evaluation until said receipt. When the query information is received, the controlling portion 7, in Step S4, as illustrated in FIG. 4, displays the received query information on the television 40 through the external device connecting portion 6. At this time, fault detail information and handling procedure information is also displayed, together with the query information, on the television 40. The user, after checking the fault detail and the handling procedure that are displayed on the television 40, can select whether to handle the fault himself/herself or whether to request handling of the fault on the host device 20 side. Moreover, the user is able to indicate his/her intentions regarding the handling method through selecting either the icon 41 or the icon 42 displayed on the television 40. If the user is not near the player 10, then the user is able to express the desire for the handling method on the host device 20 side through responding to the email, telephone, or postal mail through which the query information notification was made.

Thereafter, the controlling portion 7 of the player 10, in Step S5, evaluates whether or not there has been a request for handling the fault on the host device 20 side. That is, it evaluates whether or not the icon 42, for requesting handling on the host device 20 side, has been selected. If the request for handling on the host device 20 side has been selected, the controlling portion 7, in Step S6, performs control so as to send the handling request information to the host device 20. Moreover, if the user has selected the icon 41 wherein the handling is to be by the user himself/herself, the controlling portion 7, in Step S7, evaluates whether or not the repair has been completed. That is, the controlling portion 7 evaluates whether or not the fault has been resolved through the handling by the user, and if the fault has been resolved (the repair has been completed), terminates the fault event procedure at that time. On the other hand, if the result of attempts by the user to handle the fault following the handling procedure in the notification is that the fault has not been resolved, then the controlling portion 7, in Step S8, performs control so as to send a could-not-resolve report to the host device 20.

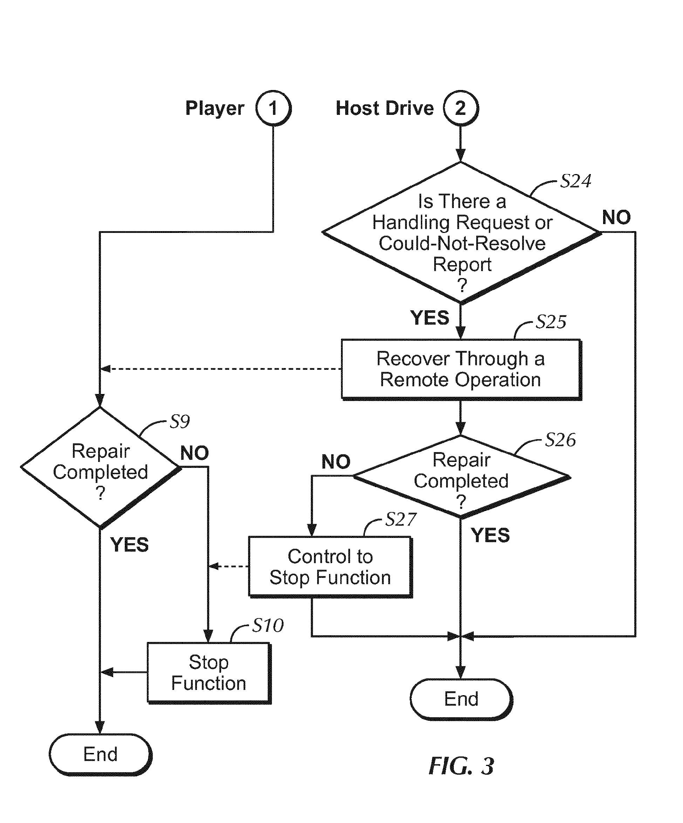

The controlling portion 21 of the host device 20, after providing notification of the query information, evaluates, in Step S24 of FIG. 3, whether or not there is a handling request or could-not-resolve report. At this time, if handling request information or a could-not-resolve report sent from the player 10 has been received, or if an expression of intent requesting handling has been indicated by the user via email, telephone, or postal mail, the controlling portion 21 evaluates that there has been a handling request or a could-not-resolve report. On the other hand, if there is neither a handling request nor a could-not-resolve report, then the fault event procedure is terminated at that point.

If there is a handling request or a could-not-resolve report, then the controlling portion 21, in Step 525, performs handling of the fault of the player 10 through a remote operation. Given this, in Step S26, an evaluation is performed as to whether or not the fault in the player 10 has been resolved and the repair has been completed, and if the repair has been completed, then the fault event procedure is terminated at that point. In this case, there is an evaluation in Step S9 on the player 10 side as well that the repair has been completed, and the fault event procedure is terminated.

On the other hand, if the fault has not been resolved through the remote operation, then the controlling portion 21 of the host device 20, in Step 527, performs control so as to stop only the function of the player 10 wherein the fault has occurred. For example, if a fault has occurred in the DVD playing function and that fault could not be resolved, then control is performed so as to stop only the DVD playing function, and control is not performed so as to stop the BD playing function or the HDD content playing function.

In this case, the controlling portion 7 of the player 10 receives, from the host device 20, control so as to stop the DVD playing function, and in Step S10, performs control so as to stop the DVD playing function. Specifically, the controlling portion 7 stops the DVD playing function by performing control so as to stop the operation of the DVD functional block 1. Note that when it comes to the BD playing function and the HDD content playing function, these are in a state wherein continued use is possible.

In the present embodiment, as described above, the host device 20 is configured so that when a fault has occurred in a specific function of the player 10, query information based on the fault event information is sent to the user as to whether the user is to handle the fault or whether to request handling of the fault on the host device 20 side. Doing so enables the user to select to handle the fault when the user wishes to handle the fault himself/herself, thus enabling improved convenience for the user when a fault has occurred. Moreover, configuring the player 10 so as to send to the host device 20, through a network, fault event information indicating that a fault has occurred in a specific function enables broad collection of information pertaining to faults by the host device 20 through the network, enabling effective utilization of the collected information, such as feeding back to the design of the player 10. Moreover, the fault event information that indicates that a fault has occurred in a specific function being sent automatically by the player 10 to the host device 20 enables more reliable collection of information pertaining to the faults, unlike the case wherein the fault event information is sent based on a sending operation by the user.

Moreover, in the present embodiment the host device 20 is configured so as to provide notification of information indicating the detail of the fault, along with the query information, to the user based on the fault event information. This enables the user to select easily the actor (the user or the host device 20) for handling the fault, depending on the detail of the fault.

Furthermore, in the present embodiment, the player 10 is configured so as to send to the host device 20, through the network, fault event information including fault type information, user information (the user name, contact information, and address information), and player identification information (a serial number or model information) when a fault has occurred in a specific function of the player 10. This enables detailed analysis to be performed pertaining to the fault that has occurred, based on the fault type information, the user information, and the player 10 identification information, on the host device 20 side, enabling a more detailed understanding of the characteristics of the fault and enabling feedback into the handling of the fault and more appropriate feedback into the design of the player 10.

Moreover, in the present embodiment the host device 20 is configured so as to perform handling of the fault of the player 10 through remote operations through the network when handling of the fault on the host device 20 side has been requested. This does not require a service technician to be dispatched to the location of the player 10 wherein the fault has occurred, enabling the fault to be handled more quickly.

Moreover, in the present embodiment the host device 20 is configured so as to stop the specific function wherein the fault has occurred, from among the plurality of functions of the player 10, when the fault in the player 10 cannot be resolved through remote operations through the network. This enables stopping of only the function for which the fault cannot be resolved, in a state wherein the functions of the player 10 that can be used are still in use, enabling use of the player 10 even after the fault has occurred, unlike the case wherein the functions of the player 10 as a whole are stopped.

Moreover, in the present embodiment the host device 20 is configured so as to provide notification of handling procedure information indicating a procedure by which the user is able to handle the fault. This enables the user himself/herself to handle the fault easily following the procedures for handling the fault. This also enables an improvement in convenience for the user.

Moreover, in the present embodiment the player 10 is configured so as to send to the host device 20, through the network, a could-not-resolve report indicating that the fault could not be resolved when the result of attempts by the user to resolve the fault were that the fault could not be resolved, and the host 20 is configured so as to stop the specific function wherein the fault has occurred, from among the plurality of functions of the player 10, based on the could-not-resolve report. This enables stoppage, by the host device 20, of only the function for which the fault could not be resolved, in a state wherein the functions that can be used in the player 10 are still used, even if the user himself/herself could not resolve the fault after attempting to do so.

Moreover, in the present embodiment a television 40 which is able to provide notification of query information is provided on the player 10 side. This enables easy notification, through the television 40, of query information to a user who is near to the player 10.

Note that the embodiment disclosed herein should be considered to be illustrative, rather than constraining, in all points. The scope of the present invention is defined by the Scope of Patent Claims, rather than by the explanation of the embodiment set forth above, and also includes all meanings that are equivalent to those in the Scope of Patent Claims, and includes all modifications within said Scope.

For example, while in the embodiment set forth above an example was presented wherein the present invention was applied to a player as a communication-compatible device, the present invention is not limited thereto. Insofar as it is configured so as to be able to communicate with a host device over a network, the present invention may be applied to a communication-compatible device other than a player, such as a television or a PC (a personal computer).

Moreover, while in the embodiment set forth above a player having a plurality of functions, namely a DVD playing function, a BD playing function, and an HDD content playing function, was presented as an example of a communication-compatible device according to the present invention, the present invention is not limited thereto. In the present invention, the communication-compatible device may be of a single function.

Moreover, while in the embodiment set forth above an example was presented wherein the configuration was such that when a fault could not be resolved only the function wherein the fault occurred would be stopped by the host device, the present invention is not limited thereto. In the present invention the configuration may instead be one wherein all functions can be stopped by the host device, rather than just the function wherein a fault has occurred. For example, if the user is not near the player (the communication-compatible device) and thus cannot handle the fault immediately, the user may request, through email or telephone, the host device side to stop all of the functions. Moreover, if, based on the fault event information, it is desirable to perform an emergency stop of all functions, for other devices as well, rather than just for the device wherein the fault occurred, the functions of a plurality of devices may be stopped temporarily through remote operations by the host device.

Moreover, while in the embodiment set forth above an example was presented wherein the configuration is such that handling procedure information was provided together with query information by the host device, the present invention is not limited thereto. The present invention may instead be configured so as to provide notification of the handling procedure information after the user has indicated intent to handle the fault himself/herself.

Furthermore, while in the embodiment set forth above an example was presented wherein the configuration was such that the query information was provided through being displayed on a television that is an external device, the present invention is not limited thereto. Instead, the present invention may be configured so that the query information is provided through a notifying portion such as a displaying portion 4 (FIG. 1) that is provided in the communication-compatible device itself. In this case, the displaying portion 4 is an example of a "notifying portion" in the present disclosure. Note that the notification is not limited to being a display, but may be notification through a sound, or may be notification through a combination of a display and a sound.

Moreover, while in the embodiment set forth above an example was presented wherein the notification of the query information was through email, telephone, and postal mail in parallel with notification to the player (the communication-compatible device), the present invention is not limited thereto. In the present invention the notification of the query information may be through email if there is no response from the user after a specific period of time (for example, one week) after providing notification of the query information to the communication-compatible device. Moreover, if there is no response from the user thereafter, then the query information may be provided through telephone, and lastly, the query information may be provided through postal mail. That is, a priority order may be provided in notifying means, and notification of the query information may be provided, with time differences, following the sequence of the host device providing notification to the communication-compatible device, providing notification through email, providing notification through telephone, and providing notification through postal mail.

Moreover, while in the embodiment set forth above an example was presented wherein query information was provided by the host device through four means, namely notification to the player (the communication-compatible device), notification through email, notification through telephone, and notification through postal mail, the present invention is not limited thereto. In the present invention, the notification of the query information may be through any one of these means, namely notification to the communication-compatible device, notification through email, notification through telephone, or notification through postal mail, or the notification may be through a combination of a plurality of these means. Moreover, the notification of the query information may be through means other than notification to the communication-compatible device, notification through email, notification through telephone, or notification through postal mail.

Furthermore, while in the embodiment set forth above an example was presented wherein fault event information was sent by the player (the communication-compatible device) in real-time when a fault occurred, the present invention is not limited thereto. In the present invention, the fault event information may instead be sent with specific timing that is not real-time, such as when the communication-compatible device is started up or when the communication-compatible device goes into a standby state.

Moreover, while in the embodiment set forth above the explanation used a flow-driven type of flow chart wherein the processing operations of the controlling portion are performed sequentially following the procedure flow, the present invention is not limited thereto. Instead, the procedure operations of the controlling portion may be performed through procedures of an event-driven type, with the procedures performed by the event unit. In such a case, this may be performed in a completely event-driven form, or may be performed by combining event-driven and flow-driven procedures.

### [Explanation of Reference Numerals]

4: Displaying Portion (Notifying Portion)
5: Internet Communicating Portion (Communicating Portion)
7: Controlling Portion
10: Player (Communication-Compatible Device)
20: Host Device
40: Television (Notifying Portion)
100: Device Fault Handling System

## Claims

1. A device fault handling system (100) comprising:
a host device (20) provided on a network; and
a communication-compatible device (10) that enables communication with the host device through the network; wherein:
the communication-compatible device (10) is configured to send to the host device (20) fault event information indicating an occurrence of a fault in a specific function of the communication-compatible device (10); and
the host device (20) is configured to provide notification of query information to the user, based on the fault event information, as to whether the fault is to be handled by the user or whether the fault is to be handled on a host device (20) side.

2. The device fault handling system (100) of claim 1, wherein:
the host device (20) is configured to provide notification to the user, based on the fault event information, indicating details of the fault together with the query information.

3. The device fault handling system (100) of claim 1 or claim 2, wherein:
the fault event information includes at least one of fault type information, user information, or communication-compatible device identification information.

4. The device fault handling system (100) of any of claims 1-3, wherein:
the host device (20) is configured to perform handling of the fault in the communication-compatible device (10) through a remote operation through the network when handling of the fault on a host device (20) side has been requested.

5. The device fault handling system (100) of claim 4, wherein:
the host device (20) is configured to stop a specific function in which the fault has occurred from among a plurality of functions of the communication-compatible device (10) when handling of the fault in the communication-compatible device (10) through a remote operation through the network is not possible.

6. The device fault handling system (100) of any of claims 1-5, wherein:
the host device (20) is configured to provide notification of information indicating a procedure for handling the fault by the user.

7. The device fault handling system (100) of claim 6, wherein:
the communication-compatible device (10) is configured to send to the host device (20) a could-not-resolve report indicating that the user could not resolve the fault; and
the host device (20) is configured to stop a specific function in which the fault has occurred, from among a plurality of functions of the communication-compatible device (10), based on the could-not-resolve report.

8. The device fault handling system (100) of any of claims 1-7, wherein:
a notifying portion (40) able to provide notification of the query information is provided on a communication-compatible device (10) side.

9. The device fault handling system (100) of claim 8, wherein:
the host device (20) is configured to provide notification of the query information through at least one of email, telephone, or postal mail when there is no response from the user within a specific time period after the notification of the query information to the communication-compatible device (10).

10. A communication-compatible device (10) comprising:
a communicating portion (5) configured to enable communication with a host device (20) through a network; and
a controlling portion (7) that:
controls the communicating portion (5) to send, to a host device (20), fault event information indicating an occurrence of a fault in a specific function of the communication-compatible device (10),
controls the host device (20) to receive the fault event information, and
provides notification of query information to a user, based on the fault event information, as to whether the fault is to be handled by the user or whether the fault is to be handled on a host device (20) side.
